# EUROPEAN PATENT APPLICATION

(11) **EP 4 510 334 A2**
(43) Date of publication of application: **19.02.2025**
(21) Application number: 24194927.0
(22) Date of filing: 16.08.2024
(51) Int. Cl.: H01M 50/213, H01M 50/503, H01M 50/519, H01M 10/42, H01M 50/249, H01M 50/284, H01M 50/517

(54) **IMPROVED BATTERY CELL HOLDER FOR BATTERY PACK**

(30) Priority: 18.08.2023 BE 202305688
(71) Applicant: C-Battery bv, 9140 Temse (BE)
(72) Inventor: ROBBENS, Bjorn, 9140 Temse (BE)
(74) Representative: Brantsandpatents bv

(57) **Abstract**

The present invention relates to a battery pack with removable electric cells, wherein improved contacts are provided to make and maintain solder-free contact with the electric cells without damaging the more fragile components, such as the electric contacts, during use.

## Description

### TECHNICAL FIELD

The invention relates to battery packs with electric cells, specifically where the cells are held in the battery pack without soldering. The battery packs should preferably serve as a compact, removable power source for electric vehicles, such as electric bicycles and/or motorcycles and/or mopeds/scooters but can also be used for cars and the like.

### PRIOR ART

Prior art battery packs include a set of electric cells that together provide the necessary power to an electrical device. In the past, these were soldered into the pack, so in case of problems, the packs were often discarded because this was more economical than deconstructing and solving the problem. Moreover, there was a high probability that during the deconstruction, further damage would be caused to the pack, making repairs more expensive or even impossible without large-scale replacement of components. Finally, manufacturing battery packs in this way is a technically cumbersome process.

For this reason, there is an increasing focus on battery packs with removable electric cells, which are therefore provided in the pack without soldering. These packs are specifically designed to make repairs and replacements easy and non-destructive, unlike the older versions.

A problem that arises with these new types, however, is the lack of certainty that the electric cells make a reliable electrical connection with the rest of the pack, and thus can supply current. Where the soldered cells had an electrical connection by default, in the new types, this is a non-fixed connection that suffers under the influence of conditions such as shocks, heat, cold, plastic deformation, material fatigue, and can lose its reliability, causing a number of cells to suddenly no longer be connected in the circuit and the battery pack can only deliver a lower power output.

Additionally, due to the loose connection, there is a danger that the electric cells have too much freedom of movement, and in this way, due to inertia, experience large accelerations relative to the rest of the battery pack, and in particular fragile components, such as the electrical connections that contact the cells. Thus, these components can be damaged, especially because such accelerations occur very frequently in many application areas (e.g., vehicles).

Finally, because of the loose connection of the electric cells in the battery pack, there is no absolute guarantee that they are correctly positioned. Small deviations in position can cause an incomplete power supply from cells, which can result in the battery pack experiencing issues delivering the necessary power, and consequently, other components or cells may wear out more quickly.

The present invention aims to find a solution for at least some of the aforementioned problems.

### SUMMARY OF THE INVENTION

The invention relates to an improved battery pack with solder-free or solder-less electric cells according to claim 1 and is particularly aimed at providing a more suitable way to ensure the electrical connection with the electric cells in the pack, in a safe, secure manner.

The battery pack typically consists of several layers, although this is not necessarily the case. A multi-layered structure offers the advantage that the pack can be kept compact, while at the same time the voltage per layer can be easily connected in series to provide the desired total voltage (and thus the desired power).

Each layer comprises on the top and bottom a printed circuit board (upper and lower, although this orientation is relative), typically a PCB. This printed circuit board is equipped with electrically conductive contact zones that serve to contact the poles of the electric cells and is further provided with conductive paths to connect the contact zones according to technical requirements (power, voltage, etc.).

The opposing printed circuit boards are configured so that each electric cell has a contact zone on each printed circuit board, one suitable for contacting the cell's positive pole and the other for contacting the cell's negative pole. The contact zones of the top and bottom printed circuit boards, therefore, have mirrored positions, but the mirrored contact zones are suitable for contacting a mutually different pole of the cell.

The contact zones are each provided with two or more conductive resilient contacts, preferably fingers, which at rest rise to a first height above the contact zones. The contacts can be elastically compressed under load to a height above the contact zones that is smaller than the first height.

The electric cells of a layer are held between the two printed circuit boards of said layer. These cells are mostly elongated, rod-shaped batteries, with a cylindrical protrusion at one end that serves as the positive pole of the battery (referred to as the cathode in Lithium-ion batteries) and a flat, conductive surface at the opposite end that forms the negative pole in practice (referred to as the anode). The side walls are equipped with an insulation layer.

The layers and/or printed circuit boards are interconnected via one or more connectors, for connecting the top and bottom printed circuit board, with the holders of the printed circuit boards facing each other, to hold the electric cells between the printed circuit boards in the holders without soldering. These connectors are typically spokes or rods that go through one or more layers and are bounded on both sides to hold the layers/printed circuit boards together. The connectors can run through all layers or through a subset of the layers.

The invention is distinguished by providing a plurality of open holders at each printed circuit board, (whether interconnected per printed circuit board or not). The holders are positioned with a first open side facing the printed circuit board, and an opposite second open side facing away from the printed circuit board, with the two open sides connected to each other.

The holders are dimensioned to receive an end of the electric cells and positioned to align the received end with one of the conductive contact zones of the printed circuit board associated with the holders.

The open holder has a first section that extends from the second side. The diameter of the opening in the first section is at least as large as the diameter of the electric cells, allowing them to be received herein with the end.

The opening of the open holders further has an internal narrowing adjacent to the first section and is positioned between the first section and the first side. The diameter of the opening at the narrowing is smaller than the diameter of the electric cells, which are thereby limited in reception depth in the open holders. The narrowing is provided at a narrowing height, which is lower than the first height.

This setup allows the electric cells to be received in the open holders, where they come to rest on a narrowing when the printed circuit boards are connected with the connectors. Hereby, the resilient contacts are somewhat compressed, but the electric cells can no longer fully compress the contacts, which often leads to plastic deformation or other damage, as well as damage to the printed circuit board.

The narrowing of the open holders thus serves as a buffer that ensures the cells can contact the contacts but provides a play in which the contacts cannot be further deformed, and the printed circuit board is also protected.

### DESCRIPTION OF THE FIGURES

Figures 1, 2, and 3 show perspectives of a battery pack according to an embodiment of the invention, with two layers of electric cells.
Figures 4 and 5 show the front and back sides of printed circuit boards used in the battery pack of the invention, according to Figures 1 - 3.
Figure 6 shows a lateral cross-section of the interface between two layers of electric cells.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a battery pack as described in the summary of the invention.

As indicated, one of the dangers with solder-free battery packs, where the electric cells are not soldered in place, is that the electric cells, often relatively heavy, have (too much) freedom of movement. The electrical contact with the printed circuit boards is typically provided by means of elastically deformable contacts (fingers in this case, although springs and the like are considered equivalent in the current application).

Due to inertia, and the frequent movement of battery packs, especially in vehicles such as motorcycles, these electric cells can impose varying loads on the contacts in a short period of time, repeatedly compressing and stretching them, which can lead to material fatigue, and in some cases even compressing them to the point of plastic deformation. Additionally, the electric cells can also impact the contacts and/or printed circuit board at such speeds that the printed circuit board gets damaged.

To avoid this, and without effectively fully securing the electric cells as in the prior art, where they are soldered in place, open holders are opted for, that form a buffer between the printed circuit board and the electric cells, and act as a "bumper" protecting the contacts (fingers) by providing a narrowing in the holders that prevents the electric cells from coming closer to the printed circuit board than a predetermined distance. In this manner, a minimum height is guaranteed for the contacts, which ensures that plastic deformation is avoided, and the printed circuit board is also shielded.

The choice of this minimum distance (narrowing height) depends on the characteristics of the contacts. Thus, for most resilient elements, especially in industrial applications, a length is known at which plastic deformation occurs, as well as the length at rest. By choosing the height of the narrowing in between these, it is ensured that the cells effectively contact the contacts, and the aforementioned disadvantages are avoided.

According to a preferred embodiment, the narrowing height is at least 25% of the first height, preferably at least 30%, more preferably 35% or even 40% or 45% or 50% of the first height. In some embodiments, the narrowing height is at least 60% or even 75% of the first height and can in principle be further increased to almost 100%.

By providing the narrowing height with a sufficiently high bottom limit, it is ensured that the compression of the contact(s) remains limited, and plastic deformation is reduced as much as possible.

Preferably, the narrowing height is at most 99% of the first height, to ensure that the electric cells are in contact with the contacts. To compensate for any variations or deformations (physical, chemical, or other), it is advisable to limit the narrowing height to at most 95% of the first height, and preferably at most 90% or even 85% or 80% of the first height. In some cases, it is even possible to opt for 75%, 65%, or even 50% of the first height as the upper limit.

Preferably, the narrowing height is bounded between an upper limit and a lower limit according to the above sections.

According to a preferred embodiment, the contacts concern leaf springs, which comprise a base and an elongated contact strip. The contact strip is resiliently mounted to the base with a first end of the contact strip, wherein the narrowing height is positioned higher than the base relative to the contact zones.

By providing a fixed base, the movable contact strip and the electric cell are separated from the printed circuit board even more securely. In this way, it cannot be damaged by the contact strip during compression, since the base will absorb these forces and pressure and distribute them better over a larger surface area. By allowing the narrowing height to protrude above the base, it is further ensured that the contact strip cannot be plastically deformed.

According to a preferred embodiment, the narrowing extends from the first section to the first side. In this manner, the force of the cells is optimally distributed through the holders on the printed circuit board, by the larger surface area on the first side of the cells.

According to a preferred embodiment, the opening of the narrowing has a constant diameter.

According to a preferred embodiment, the opening of the first section has a constant diameter. In this manner, the cells in the first section are kept stable over a greater length.

According to a preferred embodiment, the diameter of the opening of the narrowing is at least as large as the diameter of the circumscribed circle defined by the resilient contacts or fingers of each conductive contact zone. As a result, all contacts can move freely, without any obstruction from the holders.

According to a preferred embodiment, the open holders per printed circuit board are provided in a one-piece grid, wherein the grid has a structure that corresponds to the configuration of the conductive contact zones of the associated printed circuit board. By providing a one-piece structure for the holders, the cells are better retained, and the holder can also be more easily fixed to the printed circuit board. Additionally, in this way it can also be very easily ensured that the cells are correctly aligned for contact with the contacts/contact zones on the printed circuit board.

According to a preferred embodiment, the grid involves a rectangular, preferably square, matrix structure.

This corresponds to a grid-shaped positioning of the electric cells, allowing the circuits on the printed circuit board to be easily provided with the necessary structure, and resulting in high power density.

In an alternative preferred embodiment, the grid pertains to a staggered grid structure. A structure of this kind ensures maximum power density, as this way as little free space as possible is provided between the cells, while the densely populated structure offers great strength.

According to a preferred embodiment, the grid comprises through-openings between three or more mutually adjacent open holders. The through-openings extend from the first side to the second side, with the connectors being provided through three or more of the through-openings.

By providing the connectors in specific through-openings between the holders, it is guaranteed on the one hand that the connectors are also supported intermediately. This avoids or reduces the risk of them folding, moving, or breaking under high loads. At the same time, this also allows the connectors to be optimally distributed, thereby distributing the load as much as possible.

Moreover, since the holders also have a fixed structure, it can be easily ensured that the through-openings of multiple layers are correctly aligned with each other.

Preferably, the through-openings are dimensioned to house the connectors as snugly as possible, in order to optimally support the connectors and limit their freedom of movement, as well as to maximize the structural strength of the holders.

According to a preferred embodiment, the open holders are fixedly positioned on the corresponding printed circuit board. As already indicated above, this ensures alignment on the contact zones/contacts, and provides additional stability and rigidity to the printed circuit board (and vice versa).

The openings of the open holders are often described as circular in this document, but this should not be considered limiting. Depending on the cross-section of the used electric cells, other shapes can also be used, with the aim of fitting as closely as possible to the shape around the electric cells. This allows square, rectangular, or (typically regular) polygonal cross-sections to be used.

According to a preferred embodiment, a support surface is defined at the transition from the first section to the narrowing, wherein said support surface is substantially parallel with respect to the associated printed circuit board. In this way, the support surface provides a maximum support area to the electric cell in the holder.

Additionally, there is no chance that the electric cell can become lodged in the narrowing, because it is abrupt.

According to a preferred embodiment, the open holders consist of an electrically insulating material, preferably with a low thermal conductivity coefficient to avoid any heat developments as much as possible.

According to a preferred embodiment, the thickness of the upstanding walls of the open holders is at least 1.0 mm, preferably at least 1.5 mm, more preferably at least 2.0 mm, or even 3.0 mm, 4.0 mm, or more.

According to a preferred embodiment, the narrowing height is at most 2.4 mm, preferably at most 2.2 mm, more preferably at most 2.0 mm, even more preferably at most 1.8 mm, and most preferably at most 1.6 mm.

According to a preferred embodiment, the narrowing height is at least 1.4 mm, preferably at least 1.6 mm, more preferably at least 1.8 mm, even more preferably at least 2.0 mm, and most preferably at least 2.2 mm.

According to a preferred embodiment, the first conductive contact zones for electrically conductive contacting of the positive poles each comprise two or more conductive resilient contacts, preferably fingers, wherein the resilient contacts are leaf springs comprising a base and an elongated contact strip resiliently attached to the base with an end of the contact strip. The contact strips extend tangentially with respect to the center of the first conductive contact zone.

For contacting the positive poles, it is important that the fingers extend tangentially around the center. The positive pole of a cell is typically provided with a central protrusion, whereby "flanking" the protrusion with the fingers, especially with three, four, five, six, or more fingers, additionally ensures the centering of the cell, but primarily that in the event of a deviating position of the cell relative to the contact zone, a number of the fingers still maintain contact with the pole.

Preferably, the contact strip has a convex, curved profile at the end thereof, which protrudes upward. This convex, curved section contacts the poles when the pack is assembled.

According to a preferred embodiment, the second conductive contact zones for electrically conductive contacting of the negative poles each comprise two or more conductive resilient contacts, preferably fingers, wherein the resilient contacts are leaf springs comprising a base and an elongated contact strip resiliently attached to the base with an end of the contact strip. Hereby, the contact strips are positioned with the second end directed towards the center of the second conductive contact zones. For contacting the negative poles, the orientation of the fingers is of less importance, considering that the negative pole typically extends across the entire underside of the cell.

Preferably, the contact strip has a convex, curved profile at the end thereof, which protrudes upward. This convex, curved section contacts the poles when the pack is assembled.

Preferably, the resilient contacts are symmetrically distributed around the center of the contact zone.

In a further preferred embodiment, the contact strips have a minimum width of 0.25 mm, preferably 0.5 mm, more preferably 0.75 mm, and even more preferably 0.90 mm or even 1.0 mm.

Preferably, these have a maximum width of 2.5 mm, preferably of 2.0 mm, even more preferably of 1.75 mm, or of 1.5 mm or even of 1.25 mm or 1.1 mm.

Most preferably the width is approximately 1.0 mm.

Preferably, the base has a larger width than the contact strip, for example, at least 0.75 mm, 1.0 mm, 1.25 mm, 1.5 mm, or even 1.6 mm.

Preferably, the base has a width of at most 3.0 mm, preferably of at most 2.5 mm or 2.0 mm, and most preferably at most 1.75 mm.

Most preferably the width is approximately 1.7 mm.

The contact strip itself, and preferably the base and the transition between the contact strip and the base, has a thickness of at least 0.025 mm, preferably at least 0.05 mm, more preferably at least 0.075 mm, and most preferably at least 0.100 mm.

Preferably, the thickness is at most 0.25 mm, preferably at most 0.20 mm, more preferably at most 0.175 mm or even 0.15 mm, and most preferably at most 0.125 mm.

Preferably, the thickness is approximately 0.12 mm (excluding any additional layers or coatings).

In a further preferred embodiment, the contact strip is provided with an additional conductive layer of a different material than the contact strip, with a width that is less than the minimum width of the contact strip. Preferably, the width of the additional conductive layer is at least 0.2 mm, preferably at least 0.3 mm. In this manner, the resilient finger itself can be manufactured from a sturdy, elastically deformable material, with desired conductive characteristics (for example, a copper alloy), and the additional conductive layer from a material that ensures very good transfer and contact. Thus, the additional conductive layer preferably comprises gold, and more preferably consists of gold.

Preferably, the additional conductive layer has a thickness of at least 0.1 µm, preferably at least 0.2 µm, even more preferably at least 0.3 µm, and most preferably at least 0.4 µm.

Preferably, the additional conductive layer has a thickness of at most 0.1 µm, preferably of at most 1.0 µm, even more preferably of at most 0.75 µm, and most preferably of at most 0.6 µm.

Most preferably, the thickness is approximately 0.5 µm.

According to a preferred embodiment, the first conductive contact zones and/or the second conductive contact zones each comprise three or more conductive resilient contacts, preferably fingers, wherein the resilient contacts together form the corners of a regular polygon, preferably centered with respect to the center of the contact zone.

According to a preferred embodiment, the first conductive contact zones are arranged in rows on the top printed circuit board and the second conductive contact zones are arranged in rows on the bottom printed circuit board, wherein the electric cells per row are arranged according to the same orientation with respect to the positive and negative pole, and wherein the orientation is different in successive rows.

By alternately providing the cells in rows with the positive and negative poles per row in the same direction, the cells can be connected in series via the printed circuit boards in a simple manner, which is not possible in the prior art, where the cells are provided per layer in the same direction. This leads to a simpler design of the printed circuit boards in the present invention compared to the known systems, where in the current version the rows are interconnected in such a way that the printed circuit board always connects positive to negative poles.

According to a preferred embodiment, the resilient contacts preferably comprise, and more preferably contain, copper or a copper alloy. This provides sufficient strength, guarantees good suspension and elastic deformation, thereby reliably contacting of the cells, and offers the desired electrical characteristics.

According to a preferred embodiment, the battery pack is provided in a rigid housing, preferably conforming as closely as possible to the shape of the battery pack so that it has minimal movement space, while also saving volume. In this housing, the battery pack is anchored, preferably with each layer.

In what follows, the invention is described by way of non-limiting examples illustrating the invention, and which are not intended to and should not be interpreted as limiting the scope of the invention.

### EXAMPLES

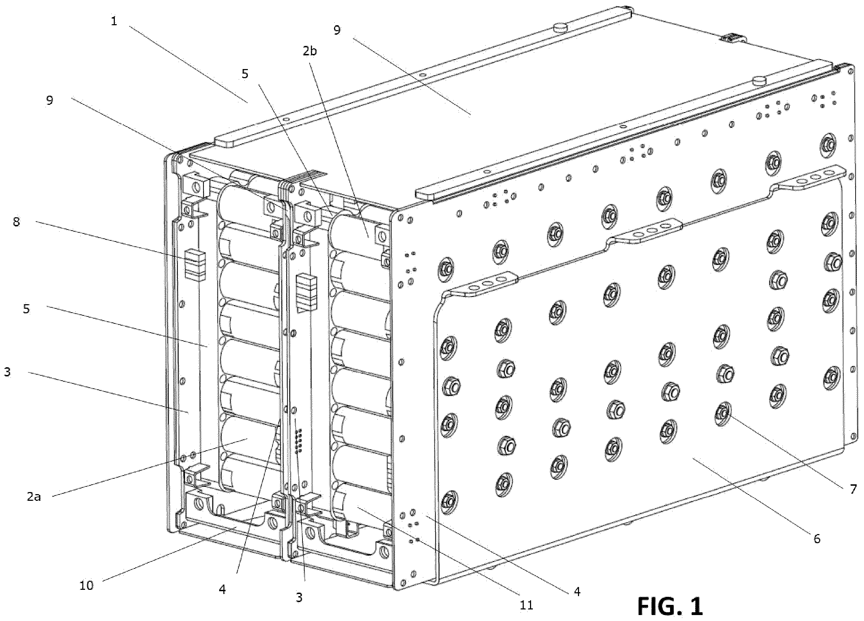

Figures 1, 2, and 3 show a battery pack (1) according to the invention from different perspectives, with two layers (2a, 2b) of electric cells (11), held together in a mechanical casing (6).

The electric cells (11) are arranged in rows in which all cells are oriented in the same direction, and contact printed circuit boards (3, 4) on both sides, a top (3) and a bottom (4) printed circuit board. Holders (5) are provided on this, which have openings in which the ends of the electric cells (11) fit, to hold them in place and to space them apart.

These holders (5) have an ordered structure, typically in rows and columns or in staggered rows, to maximize power density, while providing sufficient strength and electrically isolating the cells.

The printed circuit boards (4, 3) are connected back to back between adjacent layers (2a, 2b), typically still separated by intermediate insulation layers (9). Such insulation layers (9) or insulation shields may also be provided on one or more sides of the battery pack (1).

The layers (2a, 2b) are held together by spokes or rods (7) that extend through the layers (2a, 2b), between the electric cells (11), and through the printed circuit boards (3, 4) and insulation layers (9) at the bottom and top of the battery pack (1). In some positions, a rigid protective plate (6) is also provided on the outside of the battery pack (1), on the insulation layers (9), through which some spokes (7) extend and anchor onto.

Additional connectors (8) can be provided on the printed circuit boards (3, 4), on which electrical connections can be made for reading voltage, temperature, and other parameters. Additionally, these connectors can also be used for mechanical support and anchoring of the battery pack, for example, for fastening in a housing.

Further, output busbars (10) are also provided between the printed circuit boards (3, 4) of a layer, at the sides/corners thereof, which serve for electrically connecting the printed circuit boards, and provide additional support between the printed circuit boards, as these busbars typically have great structural strength.

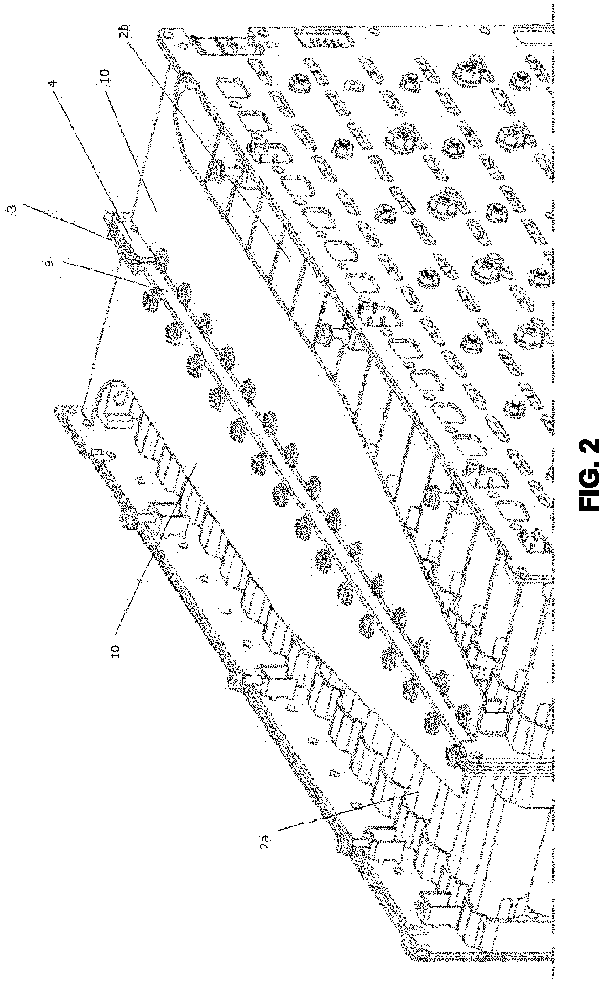

The output busbars extend over a substantial part of a side of the battery pack, for optimal distribution of the current (and thereby heat due to the Joule effect), as seen in Figure 2. The two busbars (10), one per layer (2a, 2b), are separated by an insulation layer (9).

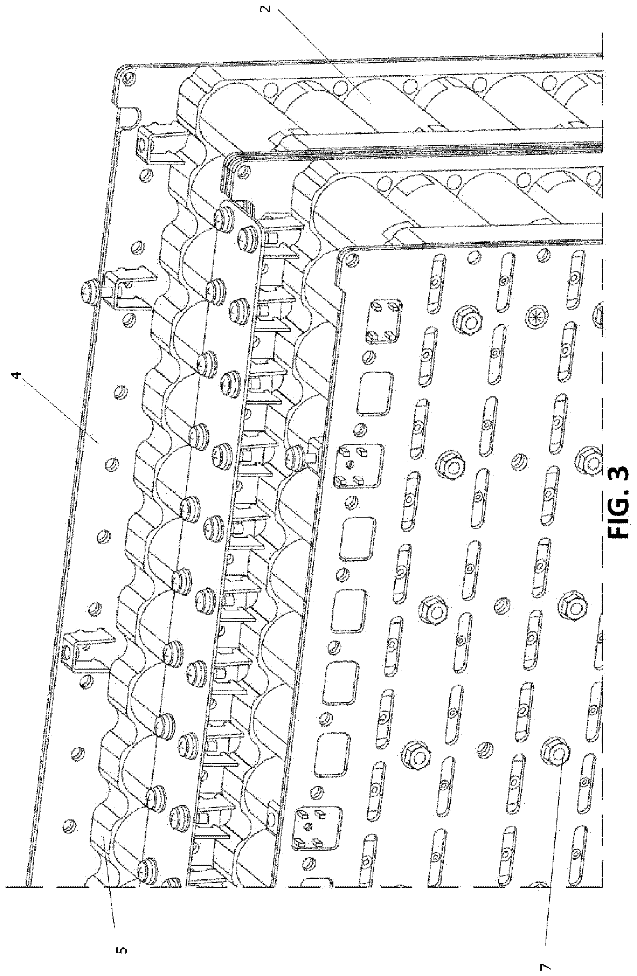

The adjacent printed circuit boards (4, 3) of two adjoining layers (2a, 2b), as seen in Figure 3 for example, are connected via power output terminals on both printed circuit boards, which are connected via a serial connector busbar (12) and thus form a parallel circuit that allows for high current capacity.

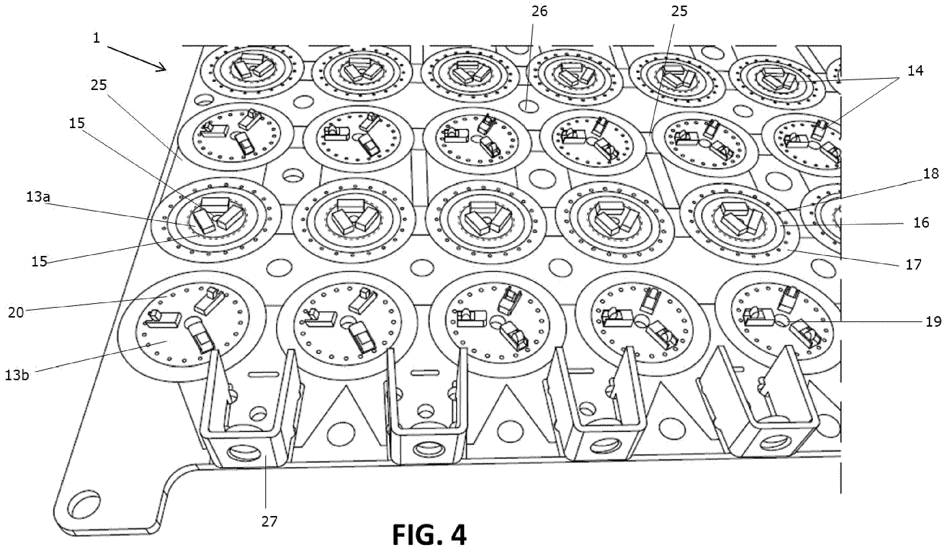

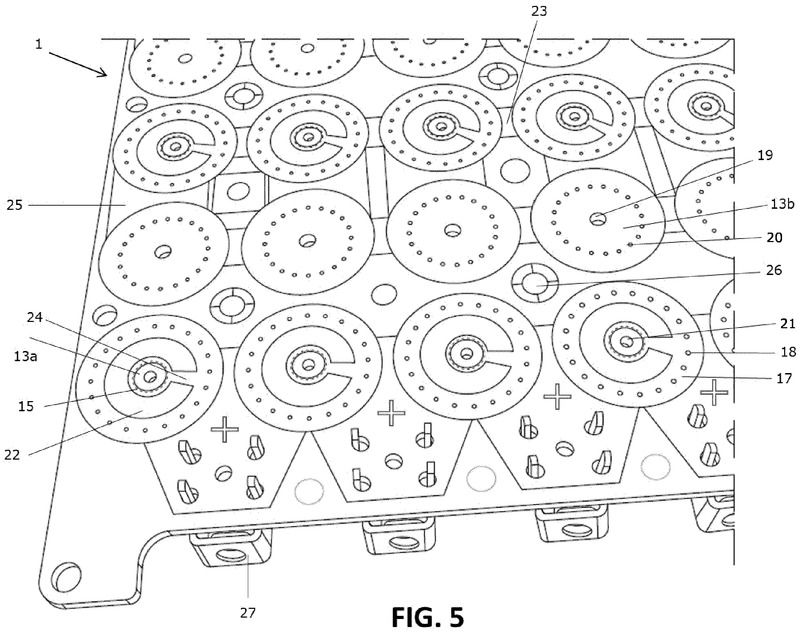

Finally, Figures 4 and 5 show the printed circuit boards (3, 4) with conductive contact zones (13). The conductive contact zones comprise a number of resilient fingers (14).

As can be seen, the resilient fingers (14) are provided in two configurations (13a, 13b), with each row alternating in configuration with its neighbors.

The first configuration (13a) has three resilient fingers (14) directed away from a center of the contact zone (13), and radially directed.

The second configuration (13b) also has three resilient fingers (14) which are tangentially positioned around the center of the contact zone (13).

The first conductive contact zone (13a) is circular and provided with a vertical interconnect access (VIA) (15) at the center of the first conductive contact zone (13a). Each first conductive contact zone (13a) is further provided with preferably three conductive resilient fingers (14). The conductive resilient fingers (14) are rectangular and are positioned with a long side toward the center. Next, a first ring of VIAs (15) is provided towards the outer edge of the first conductive contact zone (13a). Adjacent to the first conductive contact zone (13a), an annular solder mask layer (16) is provided. Adjacent to this solder mask layer (16), a conductive outer ring (17) is provided. A second ring of VIAs (18) can be observed on this conductive outer ring.

The second conductive contact zone (13b) is circular and provided with a VIA (19) at the center of the second conductive contact zone (13b). Every second conductive contact zone (13b) is further provided with preferably three conductive resilient fingers (14). The conductive resilient fingers are rectangular and are positioned with a short side towards the center. Subsequently, a ring of VIAs (20) is positioned between the resilient fingers (14) and an outer circumference of the second conductive contact zone (13b).

Figure 5 shows the back side of a printed circuit board (3, 4). Alternating rows of conductive contact zones can be observed on the back side of the printed circuit board (3, 4). A first row comprises first conductive contact zones (13a) for electrically conductive contacting of the positive poles. A second row comprises second conductive (13b) contact zones for electrically conductive contacting of the negative poles, and so forth.

The first conductive contact zone (13a) is circular and provided with a VIA (21) in the center of the first conductive contact zone (13a), this VIA (21) corresponds to the VIA (21) of the center of the cell side of the printed circuit board. Subsequently, a circular solder mask layer (22) is provided adjacent to the first conductive contact zone (13a). A first ring (15) of VIAs is positioned between the solder mask layer (22) and the VIA (21) at the center of the first conductive contact zone. Further, the annular solder mask layer (22) is interrupted by a fuse strip (23). Adjacent to the solder mask layer (22) is a conductive outer ring (17), wherein the conductive outer ring (17) is provided with a second ring of VIAs (18). The VIAs of the first ring (15) and the second ring (18) of the back side of the printed circuit board (3, 4) correspond respectively to the VIAs of the first ring (15) and the second ring (18) of the cell side of the printed circuit board.

The second conductive contact zone (13b) is circular and provided with a VIA (19) at the center of the second conductive contact zone (13b); this VIA (19) corresponds to the VIA (19) at the center of the cell side of the printed circuit board. Further, a ring of VIAs (20) is provided on the second conductive contact zone (13b), positioned correspondingly with those of the second conductive contact zones of the cell side of the printed circuit board.

Both in figure 4 and in figure 5, parallel connections (24) between the cells within a P-group are visible. There are also serial connections (25) observable between each p-group using the widest possible copper to prevent voltage drop. Further, marked holes (26) are observable, these holes indicate the location of the compression bolts/spokes. Finally, Figures 4 and 5 show the power output terminals (27), which are connected in parallel to allow for a higher current load.

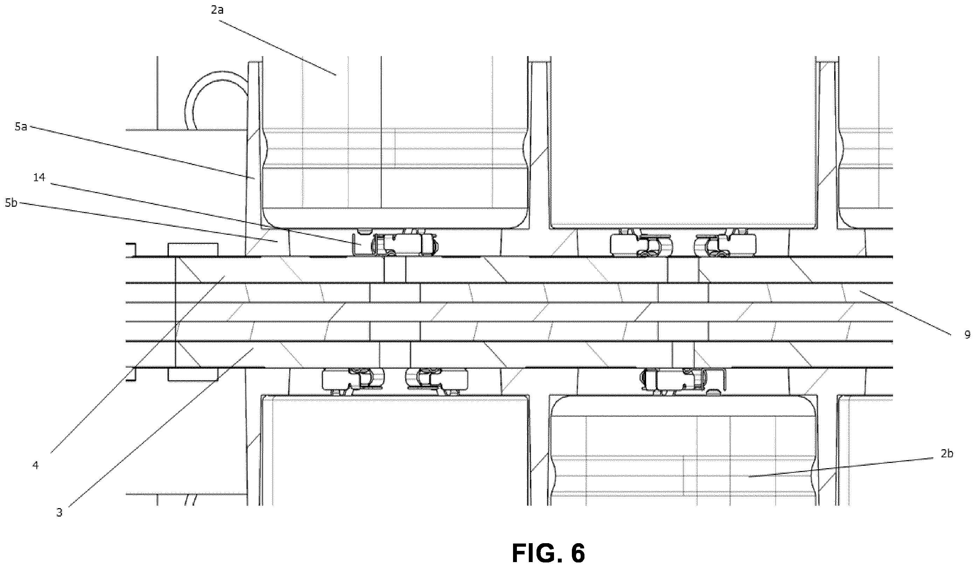

Figure 6 shows two adjacent layers of cells (2a, 2b), each provided with a printed circuit board (4, 3) that is separated by a number of insulation layers (9). A one-piece holder (5, 5a, 5b) is provided at each of the layers, in which the cells (2a, 2b) are provided. The cells (2a, 2b) are received in the first section (5a), and rest on the narrowing (5b), such that the contacts (14) come into contact with the electric cells (2a, 2b), but do not rest on them.

The present invention should not be construed as being limited to the embodiments described above and certain modifications or changes may be added to the examples described without having to re-evaluate the appended claims. For example, the present invention has been described with reference to electric vehicles, but it should be clear that the invention can be applied to, for instance, home batteries and other stationary electronic devices.

## Claims

1. Battery pack for electronic devices, preferably for electric vehicles such as bicycles and/or motorcycles, comprising one or more layers, each layer comprising:
a. a plurality of elongated electric cells held solder-free in the layer, having a positive pole at a first end, and a negative pole at a second, opposite end;
b. a top printed circuit board comprising a plurality of first conductive contact zones for electrically conductive contacting of a pole of the electric cells;
c. a bottom printed circuit board comprising a plurality of second conductive contact zones for electrically conductive contacting of a pole of the electric cells;
d. one or more connectors, for interconnecting the top and bottom printed circuit board, with the holders of the printed circuit boards facing each other, to hold the electric cells between the printed circuit boards in the holders without soldering;
wherein the first conductive contact zones and/or the second conductive contact zones each comprise two or more conductive resilient contacts, preferably fingers, which at rest have a first height relative to the contact zones;
wherein each of the printed circuit boards is provided with a plurality of open holders having a first open side facing the printed circuit board, and an opposite second open side facing away from the printed circuit board, wherein the holders are dimensioned to receive an end of the electric cells and to align the received end with one of the conductive contact zones, wherein the open holders have a first section extending from the second side,
wherein the diameter of the opening in the first section is at least as large as the diameter of the electric cells, and wherein the opening has an internal narrowing adjacent to the first section and positioned between the first section and the first side, and wherein the diameter of the opening at the narrowing is smaller than the diameter of the electric cells, wherein the narrowing is provided at most at a narrowing height relative to the contact zones, wherein the narrowing height is lower than the first height,
wherein the open holders per printed circuit board are provided in a one-piece grid, wherein the grid has a structure that corresponds to the configuration of the conductive contact zones of the associated printed circuit board,
**characterized in that** the grid includes through-openings between three or more mutually adjacent open holders, which through-opening extends from the first side to the second side, and wherein the connectors are provided through three or more of the through-openings,
and that the through-openings have been dimensioned to accommodate the connectors contiguously.

2. The battery pack according to the preceding claim 1, wherein the narrowing height is at least 25% of the first height, preferably at least 50% of the first height.

3. The battery pack according to any of the preceding claims 1 or 2, wherein the resilient contacts are leaf springs comprising a base and an elongated contact strip resiliently attached to the base with a first end of the contact strip, wherein the narrowing height is positioned higher than the base with respect to the contact zones.

4. The battery pack according to any of the preceding claims 1 to 3, wherein the narrowing extends to the first side.

5. The battery pack according to any of the preceding claims 1 to 4, wherein the opening of the narrowing has a constant diameter.

6. The battery pack according to any of the preceding claims 1 to 5, wherein the opening of the first section has a constant diameter.

7. The battery pack according to any of the preceding claims 1 to 6, wherein the diameter of the opening of the narrowing is at least as large as the diameter of the circumscribed circle defined by the resilient contacts of each conductive contact zone.

8. The battery pack according to any of the preceding claims 1 to 7, wherein the grid comprises a rectangular, preferably square, matrix structure or wherein the grid comprises a staggered grid structure.

9. The battery pack according to any of the preceding claims 1 to 8, wherein the open holders are fixedly positioned on the corresponding printed circuit board.

10. The battery pack according to any of the preceding claims 1 to 9, wherein the open holders have substantially circular openings.

11. The battery pack according to any of the preceding claims 1 to 10, wherein a support surface is defined at the transition from the first section to the narrowing, and wherein said support surface is substantially parallel to the associated printed circuit board.

12. The battery pack according to any of the preceding claims 1 to 11, wherein the open holders consist of an electrically insulating material.

13. The battery pack according to any of the preceding claims 1 to 12, wherein the open holder has upstanding walls with a minimum thickness of 2.0 mm.

14. The battery pack according to any of the preceding claims 1 to 13, wherein the narrowing height is at most 2.4 mm, and preferably at most 2.2 mm, more preferably at most 2.0 mm, even more preferably at most 1.8 mm, and most preferably at most 1.6 mm.

15. The battery pack according to any of the preceding claims 1 to 14, wherein the narrowing height is at least 1.4 mm, and preferably at least 1.6 mm, more preferably at least 1.8 mm, even more preferably at least 2.0 mm, and most preferably at least 2.2 mm.
